# EUROPEAN PATENT APPLICATION

(11) **EP 2 836 029 A1**
(43) Date of publication of application: **11.02.2015**
(21) Application number: 13306142.4
(22) Date of filing: 09.08.2013
(51) Int. Cl.: H04W 52/02

(54) **Radio coverage enhancement employing message repetition**

(71) Applicant: ALCATEL LUCENT, 92100 Boulogne-Billancourt (FR)
(72) Inventor: Wong, Shin Horng, Swindon, Wiltshire SN5 7DJ (GB); Palat, Sudeep, Swindon, Wiltshire SN5 7DJ (GB)
(74) Representative: Coghlan, Judith Elizabeth Kensy

(57) **Abstract**

A method of controlling machine type communication user equipment operation in a wireless communications network configured to support communication with said user equipment according to a communication mode which utilises repetition of messaging to ensure said user equipment can communicate with said network, wherein said communication mode is implemented at selected times during operation of said network, a computer program product and network control node operable to perform that method. The method comprises: determining an end time at which a current communication mode of operation is due to end and a start time at which a future communication mode of operation is due to begin; and communicating an indication of the end time and said start time to the user equipment during the current communication mode of operation. Aspects and embodiments described allow for synchronisation between eNode B and CE-MTC user equipment within a network. In particular, aspects and embodiments may allow CE-MTC user equipment to wake up at the right time to connect to a network and receive coverage and yet save battery between those times when it can successfully communicate with the network.

## Description

### FIELD OF THE INVENTION

A method of controlling user equipment operation in a wireless communications network configured to support communication with said user equipment according to a communication mode which utilises repetition of messaging to ensure said user equipment can communicate with said network, wherein said communication mode is implemented at selected times during operation of said network, a computer program product and network control node operable to perform that method. A method of controlling a sleep period for user equipment operation in a wireless communications network, a computer program product and machine type communication user equipment operable to perform that method.

### BACKGROUND

Wireless telecommunications systems are known. In a cellular system, radio coverage is provided to user equipment, for example, mobile phones, in areas known as cells. A base station is located in each cell to provide radio coverage. User equipment in each cell receives information and data from a base station and can be operable to transmit information and data to the base station.

Information and data transmitted by a base station to user equipment occurs on channels of radio carriers known as downlink channels. Information and data transmitted by user equipment to the base station occurs on channels of radio carriers known as uplink channels. Although the deployment of base stations is largely controlled or controllable by a network operator, the deployment of user equipment is not. The deployment of user equipment within a network can cause unexpected consequences.

Accordingly, it is desired to provide techniques for communicating with user equipment in a network.

### SUMMARY

A first aspect provides a method of controlling user equipment operation in a wireless communications network configured to support communication with the user equipment according to a communication mode which utilises repetition of messaging to ensure the user equipment can communicate with the network, wherein the communication mode is implemented at selected times during operation of network; the method comprising: determining an end time at which a current communication mode of operation is due to end and a start time at which a future communication mode of operation is due to begin; and communicating an indication of the end time and the start time to the user equipment during the current communication mode of operation.

The first aspect recognises that one issue which may occur in the deployment of user equipment within a network is that they can become deployed in areas suffering from very high attenuation. Such high attenuation can cause user equipment to be unable to decode downlink information which can be essential for being able to access appropriate downlink traffic. If deployed in such areas of high attenuation, user equipment may be effectively unable to receive traffic from a base station.

The first aspect recognises that techniques for providing information to user equipment in high attenuation deployments exist. The first aspect also recognises that there is an emerging class of user equipment (such as machine type communication devices which may be used on Smart meters) which tend to be immobile once installed and thus, although mobile user equipment may simply find it inconvenient when located in high attenuation areas and yet have restored coverage when the user equipment moves to a lower attenuation, such stationary user equipment may be permanently located in a region of high attenuation and no network coverage may be provided for those users.

Techniques for ensuring some kind of communication can occur for user equipment located in high attenuation areas typically comprise, for example, implementing a different communication technique at the base station; for example, large numbers of repetitions of transmissions of a single message such that user equipment located in a high attenuation area has an opportunity to receive and re-compile that message. That is to say, by repeating transmission of a message, user equipment may be operable to combine successive repetitions in order to increase the likelihood that a message can be decoded. Such repetitions may be used to increase coverage provided in areas of high attenuation.

A Machine Type Communication (MTC) device is a user equipment used by machine for a specific operation. One example of such an MTC device would be a Smart utility meter. As described, some such devices may be located in areas of particularly high attenuation; for example, in basements which suffer from high penetration loss. It can therefore be difficult for those MTC devices to communicate with a network. Coverage enhancement techniques aim to extend coverage provided to such MTC user equipment by approximately 15 dB. Such coverage enhanced user equipment are referred to as CE-MTC UE (Coverage Enhanced MTC UE). In order to extend coverage to such user equipment, the network must be operable without extending total transmission power of a base station (for example, an eNode B) or the total transmission power of user equipment. Repetition has been identified as the main method. That is to say, repetition represents a means to extend coverage to user equipment in a particularly high attenuation area. The number ofrequired repetitions is significant and maybe in the hundreds. Such a level of repetition has significant impact on the spectral efficiency of a network. It will be understood that a network has to provide repeat SIBs (System Information Broadcast messages) and reserve additional RACH resources when operating in coverage extension mode.

The first aspect recognises that techniques used to communicate with high attenuation user equipment may only be deployed at certain times. That is to say, constant support of user equipment in high attenuation areas may be impossible or represent highly inefficient network usage.

The first aspect recognises that a network will not always be in a coverage extension or coverage enhancement mode and that it can be beneficial for a network to only operate in coverage enhanced mode at periods of low user traffic. The first aspect recognises that user equipment which might otherwise receive no signal and only receive signal during coverage enhancement periods may save power by operating in a dormant or powered-off mode when a network is not operating in a coverage enhanced mode.

The first aspect recognises that an appropriately selected user equipment permanently located in a location experiencing high attenuation may save power by going into semi-power-off or dormant mode when the network is operating in a normal mode of operation. In other words, it is expected that a network will only be operable to properly service coverage enhanced MTC user equipment using non-busy hours, for example, in the middle of the night, to avoid impacting upon service offered to normal user equipment. As a result, a base station (for example, an eNode B) may operate in two modes: normal mode and coverage enhanced mode. Aspects and embodiments may provide a means for a network and user equipment to switch between normal and coverage enhanced modes.

In one embodiment, the indication of the end time and the start time comprises an indication of a repeated periodic pattern of the communication mode of operation. Accordingly, the modes of operation implemented to support MTC-UE in high attenuation locations may be substantially periodic. In particular, an enhanced mode of operation may be implemented at the same low-activity time each day, for the same duration each day. Accordingly, an indication of start and end time may, for example, comprise an indication of an on period and an indication of an elapsed time between on periods.

In one embodiment, the start time at which a future communication mode of operation is due to begin comprises a start time of the next communication mode of operation. In some embodiments, a network control node may only be able to determine its intended next intended "on" period , rather than operating according to a known periodic pattern. Accordingly, it may be appropriate to provide user equipment in high attenuation areas with an indication of the next time that it is likely to be able to establish communication with a network, so that it can take appropriate action to be ready to communicate at that time.

In one embodiment, communicating an indication of the end time and the start time to the user equipment comprises transmission of the start and end time as a system information block (SIB) message. In some embodiments, a MIB message may be used to convey the start and end time to user equipment. Accordingly, by providing a suitable broadcast message, all user equipment operating to communicate with the network can be informed of another time at which communication with a network will be possible. Accordingly, since it is expected that CE-MTC user equipment are likely to be turned off or in a dormant state between operational periods, those user equipment would typically need to operate to achieve synchronisation when first connecting to a network. In order to achieve such synchronisation, those user equipment must read the MIB and SIB when they first wake up during a period in which an eNode B operates in coverage enhancement mode. An updated coverage enhancement pattern may therefore be obtained whenever user equipment first enters operation during a coverage enhancement period. That pattern may be communicated to user equipment by updating a SIB or MIB. According to some aspects and embodiments, it will be appreciated that a selected coverage enhancement pattern indicated in a SIB or MIB would be unlikely to change during a coverage enhancement period or mode of operation.

In one embodiment, communicating an indication of the end time and the start time to user equipment comprises transmission of the start and end time in dedicated messaging to the user equipment. Such an embodiment may allow a network to schedule some user equipment to operate using a different coverage enhancement period. For example, an eNode B may be operable to schedule half the user equipment operating in coverage enhancement mode to operate in every coverage enhanced period, whilst another half of those user equipment may operate in every other coverage enhancement period. A direct message sent to user equipment may override a coverage enhancement pattern message broadcast in a SIB or MIB.

A second aspect provides a computer program product operable, when executed on a computer, to perform the method of the first aspect.

A third aspect provides a network control node operable to control user equipment operation in a wireless communications network configured to support communication with user equipment according to a communication mode which utilises repetition of messaging to ensure user equipment can communicate with the network, wherein the communication mode is implemented at selected times during operation of the network; the network control node comprising: mode of operation determination logic operable to determine an end time at which a current communication mode of operation is due to end and a start time at which a future communication mode of operation is due to begin; and communication logic operable to communicate an indication of the end time and the start time to the user equipment during the current communication mode of operation.

In one embodiment, the indication of the end time and the start time comprises an indication of a repeated periodic pattern of the communication mode of operation.

In one embodiment, the start time at which a future communication mode of operation is due to begin comprises a start time of the next communication mode of operation.

In one embodiment, the communication logic is operable to communicate an indication of the end time and the start time to the user equipment by transmitting the start and end time as a system information block (SIB) message.

In one embodiment, the communication logic is operable to communicate an indication of the end time and the start time to the user equipment by transmitting the start and end time in dedicated messaging to the user equipment.

A fourth aspect provides a method of controlling a sleep period for user equipment operation in a wireless communications network configured to support communication with user equipment according to a communication mode which utilises repetition of messaging to ensure user equipment can communicate with the network, wherein the communication mode is implemented at selected times during operation of the network; the method comprising: determining an indication of an end time at which a current communication mode of operation is due to end and an indication of a start time at which a future communication mode of operation is due to begin; and implementing a sleep period to occur between the end time and the start time.

In one embodiment, determining comprises: looking up a preconfigured start time and implementing a sleep period to occur between a current time and the preconfigured start time. Accordingly, an initial coverage enhancement pattern can be configured when CE-MTC user equipment is first deployed within a network. Such an embodiment may allow for coverage enhancement MTC user equipment to wake up for the first time in a manner which assures that it maybe able to communicate with an eNode B during a coverage enhancement period of operation. According to one embodiment, a fallback coverage enhancement pattern can be defined for each CE-MTC user equipment. It is possible that user equipment in highly attenuated areas may miss a coverage enhancement period (for example, due to a battery failure or a power cut) and therefore miss information relating to a following scheduled coverage extension period. In such an instance, a fallback coverage enhancement period may be utilised such that coverage enhanced MTC user equipment may be operable to re-sync themselves back and thus find an updated coverage enhancement period. In such a scenario, an eNode B would typically be configured to have knowledge of such a scheduled fallback coverage enhanced period. The fallback period may, for example, comprise a specific period in a day. In some embodiments, a fallback coverage enhancement period may be an initial coverage enhancement period set in accordance with alternative embodiments.

In one embodiment, determining comprises: receiving a broadcast message including an indication of the end time and the start time.

In one embodiment, determining comprises: receiving a dedicated message including an indication of the end time and the start time.

According to further embodiments, user equipment may be operable to continuously monitor SIBs to identify the start of a coverage enhanced mode. Such a scenario may allow for shorter and flexible delays to allow for communication with coverage enhanced MTC devices. Such a scenario may be used for user equipment that do not have particular knowledge of a coverage enhanced pattern, or in respect of user equipment which have no requirement for additional battery saving.

In one embodiment, the user equipment is operable to initiate wake up a pseudorandom time period after the start time. According to some embodiments, wake up of a coverage enhanced MTC user equipment may be set such that it occurs a pseudorandom period after the start of a known coverage enhancement period of operation. Such an implementation may avoid all coverage enhanced MTC devices waking up at the same time and attempting to attach to the network at the same time, thereby overloading the network.

A fifth aspect provides a computer program product operable, when executed on a computer, to perform the method of the fourth aspect.

A sixth aspect provides user equipment operable to control a sleep period of the user equipment in a wireless communications network configured to support communication with the user equipment according to a communication mode which utilises repetition of messaging to ensure the user equipment can communicate with the network, wherein the communication mode is implemented at selected times during operation of the network; the user equipment comprises: determination logic operable to receive an indication of an end time at which a current communication mode of operation is due to end and an indication of a start time at which a future communication mode of operation is due to begin; and
sleep logic operable to implement a sleep period to occur between said end time and said start time.

In one embodiment, determining comprises: looking up a preconfigured start time and implementing a sleep period to occur between a current time and the preconfigured start time.

In one embodiment, determining comprises: receiving a broadcast message including an indication of the end time and the start time.

In one embodiment, determining comprises: receiving a dedicated message including an indication of the end time and the start time.

In one embodiment, the user equipment is operable to initiate wake up a pseudorandom time period after the start time.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically a network deployment capable of coverage enhancement;
Figure 2 illustrates schematically operation of a base station in which coverage enhancement mode is possible; and
Figure 3 illustrates schematically coverage enhancement mode as implemented by a base station (for example, an eNode B) according to one embodiment.

### DESCRIPTION OF THE EMBODIMENTS

### Overview

Before discussing the embodiments in any more detail, first an overview will be provided. As mentioned above, one difficulty with deploying some types of user equipment is that they are located in areas which suffer from high losses; for example, high penetration losses due to their position within a building. Therefore, it is difficult for those user equipment to communicate with a network. One example of such user equipment is a Machine Type Communication device typically used by a machine such as, for example, a Smart utility meter. Some such Smart utility meters may be located in basements or other areas which suffer from high attenuation of radio signals. It will be understood that those user equipment are substantially static and are unlikely to move to a region suffering from less attenuation. Some of those Smart utility meters operate in such a manner that it is desired to extend the coverage of those devices by 15 dB. According to the operation of some networks, a base station may be operable to perform a special mode of operation at periods of low network traffic. That special mode of operation, known as coverage enhancement, is such that messages sent to users in regions of very high attenuation are repeated a number of times. In particular, some messages maybe repeated a number of times within a radio frame of a downlink transmission channel. Repeating messaging enables energy and information from successive repetitions to be combined in order to improve the likelihood of user equipment being able to decode information contained in such a message. However, in order to achieve coverage in very high penetration loss areas, the extent of repetition within a radio frame may result in virtually the whole resource of the radio frame over a 40 ms window being required to be used for transmissions of, for example, a master information block, particularly for a narrow bandwidth carrier.

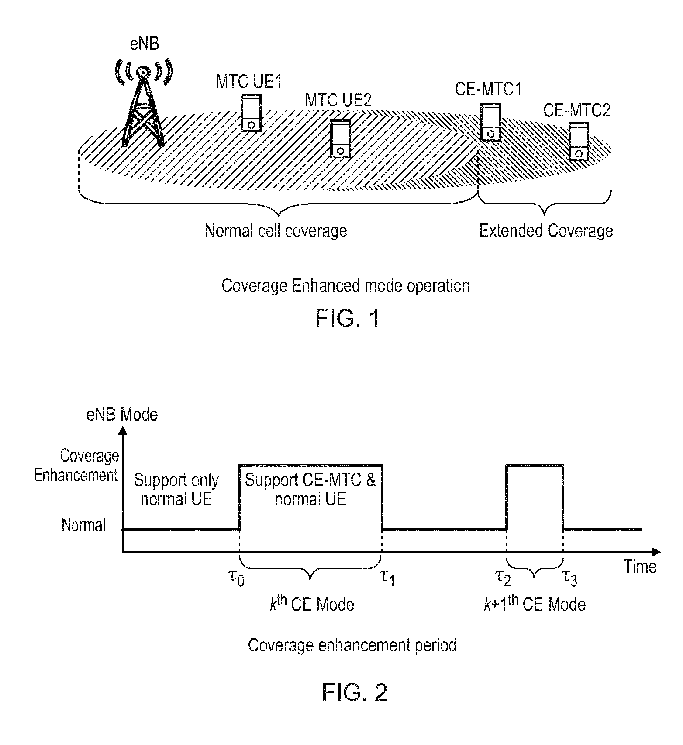

Figure 1 illustrates schematically a base station, in this case an eNode B, which is capable of operating a normal coverage mode and so-called "coverage enhancement" mode. A number of Machine Type Communication user equipment are illustrated which exist within the coverage region of the eNode B. It will be seen that two of those Machine Type Communication user equipment, MTC UE1 and MTC UE2, operate within a region of normal cell coverage provided by the eNode B. Two further user equipment: CE-MTC1 and CE-MTC2, are only able to communicate with the eNode B when it operates in coverage enhanced mode. That is to say, the radio condition of the location where those user equipment are situated is such that those user equipment can only successfully receive messaging from the eNode B when a repetitive mode of communication is implemented at the eNode B. It will be understood that MTC UE1 and MTC UE2 may be served by the eNode B at all times whilst CE-MTC1 and CE-MTC2 may only operate when the eNode B is operating in coverage enhanced mode.

Aspects and embodiments recognise that an eNode B or other network access node may operate in two modes. Firstly, an eNode B may operate in a normal mode. That mode will be understood to be essentially legacy eNode B operation, such that there is no coverage enhancement feature for MTC devices. In this mode, the eNode B can only support normal user equipment which fall within normal radio coverage. Secondly, an eNode B may operate in coverage enhancement mode (CE mode). According to such a mode, the coverage for physical channels required for coverage enhanced MTC user equipment can be enhanced. Heavy repetition is performed on those physical channels. In such a mode, the eNode B may support both normal user equipment and coverage enhanced MTC user equipment.

Aspects and embodiments introduce a new coverage enhancement pattern message which can operate to indicate a pattern of coverage enhancement to those user equipment which are coverage enhancement MTC user equipment. The new message is only intended for, and of use to, coverage enhancement MTC user equipment. It is intended that the coverage enhancement pattern message can indicate to user equipment in the coverage enhancement zone when an eNode B is next likely or next intends to implement a coverage enhancement mode of operation and, thus, user equipment can sleep between periods where they are able to see a network, thus enabling user equipment to save battery power in between those periods of coverage enhancement operation by an eNode B.

In other words, a coverage enhancement pattern message may tell user equipment how long a coverage enhancement mode of operation may last and when the next coverage enhancement pattern period will begin.

Various means to implement such a coverage enhancement pattern message may be envisaged. According to one embodiment, the "coverage enhancement pattern" indicates a repeated periodicity of coverage enhancement and an indication of how long a base station may operate in coverage enhancement mode and how long in normal mode operation. In particular, the message may comprise an indication of the duration of a coverage enhancement period and a cycle relating to such a coverage enhancement period. According to some embodiments, an eNode B may be operable to switch between coverage enhancement and normal mode of operation according to the cycle indicated to user equipment.

According to another embodiment, a coverage enhancement pattern message may indicate the end of a current coverage enhancement mode and the start of the next coverage enhancement mode to be implemented by a base station.

Figure 2 illustrates schematically potential eNode B operation mode changes across a time period. According to Figure 2, the eNode B mode changes across a time period and two distinct coverage extension periods are shown. In those two distinct coverage enhancement periods the eNode B operates in coverage enhancement mode and in this case those periods are referred to as the kth and k+1th coverage enhancement periods. The kth CE period starts at time T0 and ends at time T1, whilst the k+1th CE period starts at a time T2 and ends at a time T3. In the illustrated embodiment, the coverage enhancement pattern message could, for example, indicates times T1 and T2. A coverage enhanced MTC user equipment operating in the kth CE mode period may therefore be operable to switch off or enter a dormant state after a time T1 and wake up in the region of time T2. Such operation may allow an eNode B a degree of flexibility when supporting coverage extension MTC user equipment. Furthermore, it may be such that an eNode B may be operable to delay entering a coverage enhancement operation period if it determines that it typically experiences heavy loading from normal user equipment on a particular day and set time T2 accordingly.

According to one embodiment, the coverage enhancement pattern may be broadcast in a SIB message. In some embodiments the coverage enhancement pattern may be broadcast in the MIB. Since it is expected that CE-MTC user equipment are likely to be turned off or in a dormant state, those user equipment would typically need to operate to achieve synchronisation when first connecting to a network. In order to achieve such synchronisation, those user equipment must read the MIB and SIB when they first wake up during a period in which an eNode B operates in coverage enhancement mode. An updated coverage enhancement pattern may therefore be obtained whenever user equipment first enters operation during a coverage enhancement period. That pattern may be communicated to user equipment by updating a SIB or MIB.

According to some aspects and embodiments, it will be appreciated that a selected coverage enhancement pattern indicated in a SIB or MIB would be unlikely to change during a coverage enhancement period or mode of operation.

According to a further embodiment, a coverage enhancement pattern can be sent to user equipment using a dedicated message. Such an embodiment may allow a network to schedule some user equipment to operate using a different coverage enhancement period. For example, an eNode B may be operable to schedule half the user equipment operating in coverage enhancement mode to operate in every coverage enhanced period, whilst another half of those user equipment may operate in every other coverage enhancement period. A direct message sent to user equipment may override a coverage enhancement pattern message broadcast in a SIB or MIB.

According to one embodiment, an initial coverage enhancement pattern can be configured when CE-MTC user equipment is first deployed within a network. Such an embodiment may allow for coverage enhancement MTC user equipment to wake up for the first time in a manner which assures that it maybe able to communicate with an eNode B during a coverage enhancement period of operation. According to one embodiment, a fallback coverage enhancement pattern can be defined for each CE-MTC user equipment. It is possible that user equipment in highly attenuated areas may miss a coverage enhancement period (for example, due to a battery failure or a power cut) and therefore miss information relating to a following scheduled coverage extension period. In such an instance, a fallback coverage enhancement period may be utilised such that coverage enhanced MTC user equipment may be operable to re-sync themselves back and thus find an updated coverage enhancement period. In such a scenario, an eNode B would typically be configured to have knowledge of such a scheduled fallback coverage enhanced period. The fallback period may, for example, comprise a specific period in a day. In some embodiments, a fallback coverage enhancement period may be an initial coverage enhancement period set in accordance with alternative embodiments.

According to further embodiments, user equipment may be operable to continuously monitor SIBs to identify the start of a coverage enhanced mode. Such a scenario may allow for shorter and flexible delays to allow for communication with coverage enhanced MTC devices. Such a scenario may be used for user equipment that do not have particular knowledge of a coverage enhanced pattern, or in respect of user equipment which have no requirement for additional battery saving.

According to some embodiments, wake up of a coverage enhanced MTC user equipment may be set such that it occurs a pseudo random period after the start of a known coverage enhancement period of operation. Such an implementation may avoid all coverage enhanced MTC devices waking up at the same time and attempting to attach to the network at the same time, thereby overloading the network.

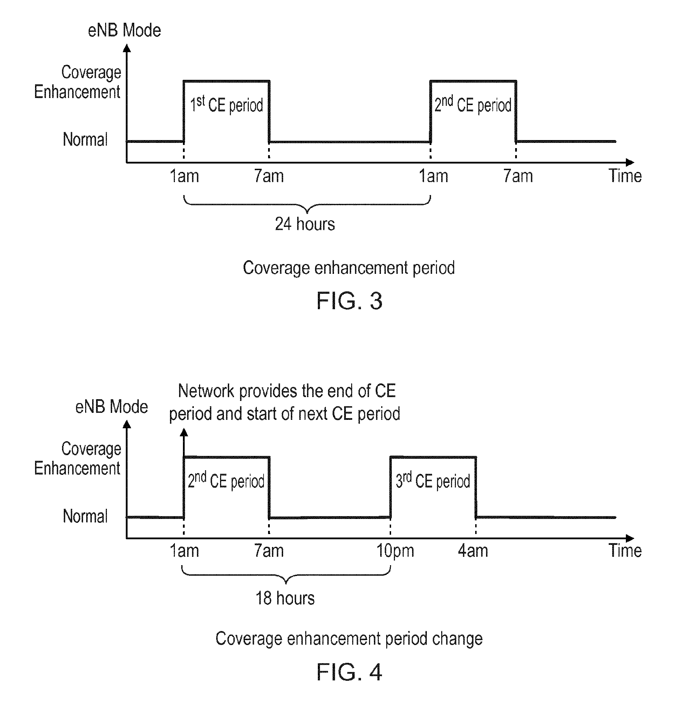

Figures 3 and 4 illustrate schematically example coverage enhancement patterns implemented by an eNode B such as that shown in the arrangement of Figure 1.

In one embodiment, a coverage enhanced pattern message may comprise five bits, as further defined below: three bits may be used to indicate a start time; for example, that start time may have a three hour step and the next coverage enhanced period may occur a minimum of three hours from time To; and two bits may be used to indicate a duration of a next coverage enhanced period, again in a three hour step with a minimum setting of three hours.

According to one example, a CE cycle may be set to 24 hours (ie, a bit value of 111) and the coverage enhanced pattern period may be set to six hours (ie, a bit value of 01). It will be understood that 000 or 00 means a minimum three hour start time and a three hour duration.

As shown in Figure 3, CE-MTC1 and CE-MTC2 maybe configured with an initial start time of 1.00 am. An eNode B may be operable to ensure that it supports coverage enhancement mode during that period. An appropriate coverage enhancement pattern is shown in Figure 3.

At the second coverage enhancement period as shown in Figure 3, an eNode B maybe operable to decide that it wishes to schedule a further or next coverage enhancement period earlier than 1.00 am. Thus, when the second coverage enhancement period starts the eNode B maybe operable to change its SIB value such that the next cycle is 18 hours away and lasts six hours.

Figure 4 shows the CE pattern after the second CE period; that is to say, the third CE period begins three hours earlier. It also shows schematically that an eNode B may be operable to provide information to user equipment about the change in coverage enhancement pattern.

Aspects and embodiments described allow for synchronisation between eNode B and CE-MTC user equipment within a network. In particular, aspects and embodiments may allow CE-MTC user equipment to wake up at the right time to connect to a network and receive coverage and yet save battery between those times when it can successfully communicate with the network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling user equipment operation in a wireless communications network configured to support communication with said user equipment according to a communication mode which utilises repetition of messaging to ensure said user equipment can communicate with said network, wherein said communication mode is implemented at selected times during operation of said network; said method comprising:
determining an end time at which a current communication mode of operation is due to end and a start time at which a future communication mode of operation is due to begin; and
communicating an indication of said end time and said start time to said user equipment during said current communication mode of operation.

2. A method according to claim 1, wherein said indication of said end time and said start time comprises an indication of a repeated periodic pattern of said communication mode of operation.

3. A method according to claim 1 or claim 2, wherein said start time at which a future communication mode of operation is due to begin comprises a start time of the next communication mode of operation.

4. A method according to any preceding claim, wherein communicating an indication of said end time and said start time to said user equipment comprises transmission of said start and end time as a system information block (SIB) broadcast message.

5. A method according to any preceding claim, wherein communicating an indication of said end time and said start time to said user equipment comprises transmission of said start and end time in dedicated messaging to said user equipment.

6. A computer program product operable, when executed on a computer, to perform the method of any one of claims 1 to 5.

7. A network control node operable to control user equipment operation in a wireless communications network configured to support communication with said user equipment according to a communication mode which utilises repetition of messaging to ensure said user equipment can communicate with said network, wherein said communication mode is implemented at selected times during operation of said network; said network control node comprising:
mode of operation determination logic operable to determine an end time at which a current communication mode of operation is due to end and a start time at which a future communication mode of operation is due to begin; and
communication logic operable to communicate an indication of said end time and said start time to said user equipment during said current communication mode of operation.

8. A method of controlling a sleep period for user equipment operation in a wireless communications network configured to support communication with said user equipment according to a communication mode which utilises repetition of messaging to ensure said user equipment can communicate with said network, wherein said communication mode is implemented at selected times during operation of said network; said method comprising:
determining an indication of an end time at which a current communication mode of operation is due to end and an indication of a start time at which a future communication mode of operation is due to begin; and
implementing a sleep period to occur between said end time and said start time.

9. A method according to claim 8, wherein determining comprises: looking up a preconfigured start time and implementing a sleep period to occur between a current time and said preconfigured start time.

10. A method according to claim 8, wherein determining comprises: receiving a broadcast message including an indication of said end time and said start time.

11. A method according to claim 8, wherein determining comprises: receiving a dedicated message including an indication of said end time and said start time.

12. A method according to any one of claims 8 to 11, wherein said user equipment is operable to initiate wake up a pseudorandom time period after said start time.

13. A method according to claim 8, comprising continuously monitoring for a message from the network including said start time and said end time.

14. A computer program product operable, when executed on a computer, to perform the method of any one of claims 8 to 13.

15. User equipment operable to control a sleep period in a wireless communications network configured to support communication with said user equipment according to a communication mode which utilises repetition of messaging to ensure said user equipment can communicate with said network, wherein said communication mode is implemented at selected times during operation of said network; said user equipment comprising:
determination logic operable to receive an indication of an end time at which a current communication mode of operation is due to end and an indication of a start time at which a future communication mode of operation is due to begin; and
sleep logic operable to implement a sleep period to occur between said end time and said start time.
